# EUROPEAN PATENT APPLICATION

(11) **EP 4 401 463 A1**
(43) Date of publication of application: **17.07.2024**
(21) Application number: 22866748.1
(22) Date of filing: 09.09.2022
(51) Int. Cl.: H04W 28/06, H04W 76/19, H04W 80/02

(54) **METHOD PERFORMED BY USER EQUIPMENT, TRANSMISSION METHOD FOR BASE STATION, AND USER EQUIPMENT**

(30) Priority: 10.09.2021 CN 202111065941
(71) Applicant: Sharp Kabushiki Kaisha, Sakai-shi Osaka 590-8522 (JP)
(72) Inventor: XIAO, Fangying, Shanghai 201206 (CN); LIU, Renmao, Shanghai 201206 (CN)
(74) Representative: Müller-Boré & Partner Patentanwälte PartG mbB
(86) International application number: PCT/CN2022/118073
(87) International publication number: WO 2023/036287

(57) **Abstract**

Provided in the present invention are a connection method for user equipment, a transmission method for a base station, and user equipment. In a method performed by user equipment according to the present invention, for a split radio bearer (RB) associated with radio link control (RLC) entities of different modes, it is determined, according to a packet data convergence protocol (PDCP) re-establishment indication reestablishPDCP transmitted by a base station, whether a corresponding PDCP entity needs to be re-established, and a PDCP entity re-establishment means is determined according to a first indication identifier reestablishPDCPAsAMUM transmitted by the base station and different from the PDCP re-establishment indication.

## Description

### TECHNICAL FIELD

The present disclosure relates to the technical field of wireless communications. More specifically, the present disclosure relates to a method performed by user equipment, a transmission method for a base station, and user equipment.

### BACKGROUND

A study item (SI) on architectural enhancements for 5G multicast-broadcast services (see SP-190625 for details) has been approved, and is ongoing. One objective (referred to as Objective A) of this SI is to support general-purpose MBS services in 5GS, and it has been determined that use cases that can benefit from these characteristics include (but are not limited to) public safety, V2X applications, transparent IPv4/IPv6 multicast delivery, IPTV, wireless software delivery, group communications, and Internet of Things applications. Correspondingly, a work item on NR multicast and broadcast services (NR MBS) (see non-patent literature: RP-193248: New WID: NR Multicast and Broadcast Service) was proposed by Huawei and approved in the 3rd Generation Partnership Project (3GPP) RAN#86 plenary session. This work item aims to provide the support in the RAN for Objective A.

The present disclosure discusses relevant issues involved in achieving the above-described work objective in the RAN.

### SUMMARY

An objective of the present invention is to provide a method performed by user equipment and for re-establishing, by using different means, a PDCP entity associated with RLC entities of different modes related to a split radio bearer (RB) associated with radio link control (RLC) of different modes, a transmission method for a base station, and user equipment.

In order to solve the above issues, provided in the present invention is a method performed by user equipment. In the method, for a split radio bearer (RB) associated with radio link control (RLC) entities of different modes, it is determined, according to a packet data convergence protocol (PDCP) re-establishment indication reestablishPDCP transmitted by a base station, whether a corresponding PDCP entity needs to be re-established, and a PDCP entity re-establishment means is determined according to a first indication identifier reestablishPDCPAsAMUM transmitted by the base station and different from the PDCP re-establishment indication.

According to the above-described method performed by user equipment, if a radio resource control (RRC) message received by user equipment comprises the PDCP re-establishment indication reestablishPDCP related to a split radio bearer (RB) and the first indication identifier for determining the PDCP re-establishment means, the PDCP entity is re-established by using an unacknowledged mode radio bearer (UM RB) means, otherwise, the PDCP entity is re-established by using an acknowledged mode radio bearer (AM RB) means.

According to the above-described method performed by user equipment, if the radio resource control (RRC) message received by the user equipment comprises the PDCP re-establishment indication reestablishPDCP related to a split RB and the first indication identifier for determining the PDCP re-establishment means, the PDCP entity is re-established by using the acknowledged mode radio bearer (AM RB) means, otherwise, the PDCP entity is re-established by using the unacknowledged mode radio bearer (UM RB) means.

According to the above-described method performed by user equipment, the first indication identifier reestablishPDCPAsAMUM has two values, wherein one value is used to indicate that the PDCP entity is re-established by using the unacknowledged mode radio bearer (UM RB) means, and the other value is used to indicate that the PDCP entity is re-established by using the acknowledged mode radio bearer (AM RB) means, the PDCP entity being re-established by using the acknowledged mode radio bearer (AM RB) means if the radio resource control (RRC) message received by the user equipment comprises the PDCP re-establishment indication reestablishPDCP and the first indication identifier having the value corresponding to the PDCP entity being re-established by using the acknowledged mode radio bearer (AM RB) means, and the PDCP entity being re-established by using the unacknowledged mode radio bearer (UM RB) means if the RRC message received by the user equipment comprises the PDCP re-establishment indication reestablishPDCP and the first indication identifier having the value corresponding to the PDCP entity being re-established by using the unacknowledged mode radio bearer (UM RB) means.

In another method performed by user equipment of to the present invention, for a split radio bearer (RB) associated with radio link control (RLC) of different modes, PDCP entity re-establishment and a PDCP entity re-establishment means are determined according to a second indication identifier reestablishPDCPIndication transmitted by a base station and different from a packet data convergence protocol (PDCP) re-establishment indication.

According to the above-described method performed by user equipment, the second indication identifier reestablishPDCPIndication has two values, wherein one value is used to indicate that a PDCP entity is re-established by using an unacknowledged mode radio bearer (UM RB) means, and the other value is used to indicate that a PDCP entity is re-established by using an acknowledged mode radio bearer (AM RB) method, the PDCP entity re-establishment and the PDCP entity re-establishment means being determined by setting the second indication identifier to a corresponding value.

In still another method performed by user equipment of the present invention, for a split radio bearer (RB) associated with radio link control (RLC) of different modes, when a corresponding packet data convergence protocol (PDCP) entity receives a PDCP entity re-establishment request from upper layers, the PDCP entity is re-established according to an acknowledged mode radio bearer (AM RB) means.

In yet another method performed by user equipment of the present invention, for a split radio bearer (RB) associated with radio link control (RLC) of different modes, when a corresponding packet data convergence protocol (PDCP) entity receives a PDCP entity re-establishment request from upper layers, the PDCP entity is re-established by using an unacknowledged mode radio bearer (UM RB) means.

In a transmission method for a base station of to the present invention, for a split radio bearer (RB) associated with radio link control (RLC) of different modes, a base station indicates, to user equipment via a packet data convergence protocol (PDCP) re-establishment indication reestablishPDCP, whether a corresponding PDCP needs to be re-established, and indicates a PDCP entity re-establishment means to the user equipment via a first indication identifier reestablishPDCPAsAMUM different from the PDCP re-establishment indication, or indicates PDCP entity re-establishment and a PDCP entity re-establishment means to the user equipment via a second indication identifier reestablishPDCPIndication different from the PDCP re-establishment indication.

User equipment of the present invention comprises: a processor; and a memory storing instructions, wherein the instructions, when run by the processor, perform the method according to any one of claims 1 to 8.

### Effect of Invention

By using the connection method for user equipment, the transmission method for a base station, and the user equipment of the present invention, for a split radio bearer (RB) associated with radio link control (RLC) of different modes, the PDCP entity associated with RLC entities of different modes can be re-established by using different means.

### BRIEF DESCRIPTION OF THE DRAWINGS

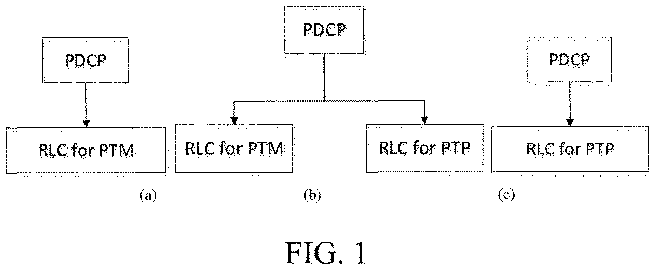

The above and other features of the present disclosure will become more apparent with the following detailed description in conjunction with the accompanying drawings.
(a) to (c) of FIG. 1 are schematic diagrams showing specific configurations of a radio bearer for receiving an MBS service.
FIG. 2 is a schematic diagram showing a method performed by user equipment according to Embodiment 1.
FIG. 3 is a schematic diagram showing a method performed by user equipment according to Embodiment 2.
FIG. 4 is a simplified structural block diagram of user equipment (UE) according to the present invention.

### DETAILED DESCRIPTION

The following describes the present disclosure in detail with reference to the accompanying drawings and specific embodiments. It should be noted that the present disclosure should not be limited to the specific embodiments described below. In addition, for simplicity, detailed description of the prior art not directly related to the present disclosure is omitted to prevent confusion in understanding the present disclosure.

The following describes some terms involved in the present disclosure. For the specific meanings of the terms, reference may be made to the latest 3GPP related documents, for example TS38.300, TS38.321, TS38.323, TS38.331, etc. In addition, embodiments of the present disclosure are not limited to broadcast/multicast services, and may also be applied to other application scenarios.
UE: User Equipment.
RRC: Radio Resource Control.
RRC_CONNECTED: RRC connected state.
RRC_INACTIVE: RRC inactive state.
RRC_IDLE: RRC idle state.
RAN: Radio Access Network.
NR: New RAT, New Radio Access Technology.
MBMS: Multimedia Broadcast/Multicast Service.
MBS: Multicast Broadcast Services.
PDCP: Packet Data Convergence Protocol.
RLC: Radio Link Control.

As an example, RLC may be acknowledged mode (AM) RLC, i.e., AM RLC, or may be unacknowledged mode (UM) RLC, i.e., UM RLC, or may be transparent mode (TM) RLC, i.e., TM RLC. A UM RLC entity is configured to transmit a UM RLC entity or receive a UM RLC entity, and submit or receive an RLC data PDU. An AM RLC entity includes a transmission end and a receiving end, and submits or receives an RLC data PDU and an RLC control PDU. In the AM mode, an RLC entity submits or receives the RLC data PDU and the RLC control PDU (i.e., a state PDU). The receiving end of the AM RLC entity uses the state PDU to notify a peer RLC entity (i.e., a transmission end of another AM RLC entity) of an RLC data PDU successfully received thereby and an RLC data PDU that is detected to be lost.

SDU: Service Data Unit. A data packet received by the present layer from an upper layer or submitted by the present layer to an upper layer is referred to as an SDU.

PDU: Protocol Data Unit. A data packet received by the present layer from a lower layer or submitted by the present layer to a lower layer is referred to as a PDU. For example, a PDCP data PDU is a data packet obtained after a PDCP header is added to a PDCP SDU.

RB: Radio Bearer.

MRB: an MBS radio bearer, i.e., a radio bearer that is configured for MBS multicast/broadcast delivery.

MCCH: Multicast Control Channel. An MBS-MCCH is used to transmit and receive control information related to an MBS service.

SC-MCCH: Single Cell Multicast Control Channel.

TMGI: Temporary Mobile Group Identity.

PLMN: Public Land Mobile Network.

RNTI: Radio Network Temporary Identifier.

PTM: Point to Multipoint, an MBS service delivery means. In a PTM delivery means, a RAN node delivers a single copy of MBS data packets over radio to a set of UEs.

PTP: Point to Point, an MBS service delivery means. In a PTP delivery means, a RAN node delivers separate copies of MBS data packets over radio to individual UE.

LTE SC-PTM: LTE Single Cell Point to Multipoint.

MTCH: Multicast Traffic Channel. MBS groupcast (or a groupcast communication service) means that the same service and the same specific content are simultaneously provided to a particular group of UEs. A groupcast session is used to deliver a groupcast communication service to UE.

A UE in RRC_CONNECTED may use PTP and/or PTM to receive a groupcast communication service.

G-RNTI: Group RNTI, used to scramble scheduling and transmission of an MTCH. One-to-one mapping between a G-RNTI and an MBS session is supported in an NR MBS.

In the present disclosure, a network, a base station, and a RAN may be used interchangeably. The network may be a Long Term Evolution (LTE) network, an NR network, an enhanced Long Term Evolution (eLTE) network, or another network defined in a subsequent evolved version of the 3GPP.

In LTE SC-PTM, a base station broadcasts, via system information and a message transmitted on an SC-MCCH channel, a multimedia broadcast multicast service (MBMS) service supported thereby and scheduling information thereof, and radio bearer configuration information for transmitting the MBMS service is predefined. UE can learn, by receiving the corresponding system information and the message transmitted on the SC-MCCH channel, an MBMS service that is supported or being performed by a current cell or base station. When the UE needs to receive a certain MBMS service, a radio bearer is established according to a predefined parameter and data is received. In this case, the UE can receive the MBMS service without establishing an RRC connection.

In NR MBS, some MBS services may also be scheduled using a means similar to that in SC-PTM, so that UE in an RRC idle state or an RRC inactive state can also receive the MBS service. However, there are some other MBS services that require that UE establishes an RRC connection to a base station, and then the base station performs configuration for the UE via dedicated RRC signaling (also referred to as a dedicated RRC message). Radio bearers for receiving these MBS services may also be configured for the UE by the base station via dedicated RRC signaling, (a) to (c) of FIG. 1 are schematic diagrams showing specific configurations of a radio bearer for receiving an MBS service. The radio bearer may be an MRB configured with only PTM transmission (as shown in (a) of FIG. 1), or a split MRB configured with both PTM and PTP (as shown in (b) of FIG. 1), or an MRB configured with only PTP transmission (as shown in (c) of FIG. 1). It should be noted that (a) to (c) of FIG. 1 show only a PDCP entity and an RLC entity corresponding to a bearer and a relationship therebetween. In the downlink direction, a PDCP PDU encapsulated by a PDCP entity is submitted to an RLC entity. For a split MRB, the base station may dynamically determine whether to use PTM or PTP to transmit an MBS session (or a PDCP PDU). For the split MRB shown in FIG. 1b, PTM RLC and PTP RLC may use different modes. For example, the PTM RLC is configured to be UM RLC, and the PTP RLC is configured to be AM RLC.

For a split MRB configured with different RLC modes, for example, PTM RLC of the split MRB being configured to be UM RLC and PTP RLC being configured to be AM RLC, when a corresponding PDCP entity is requested to be re-established, how to re-establish the PDCP entity associated with RLC entities of different modes is a problem that needs to be solved.

The following provides four implementations to solve the above problem. It should be noted that embodiments of the present invention are described by using a split MRB configured with different RLC modes as an example, but the embodiments of the present invention may also be applied to other split RBs configured with different RLC modes.

### Implementation 1: a base station indicates, to UE via RRC signaling, which means is used to re-establish a PDCP entity of a split MRB associated with RLC entities of different modes

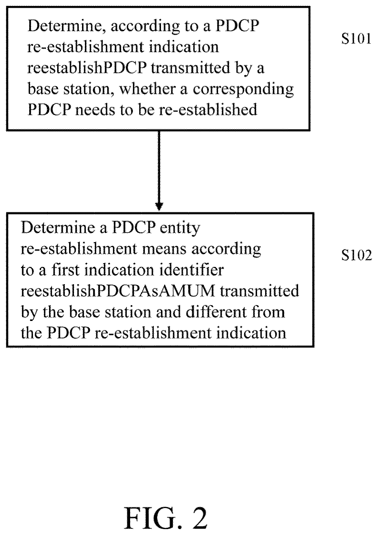

FIG. 2 is a schematic diagram showing a method performed by user equipment according to Embodiment 1. In Embodiment 1, a base station may indicate, via a PDCP re-establishment indication reestablishPDCP, whether a corresponding PDCP needs to be re-established, and indicate a PDCP entity re-establishment means via a first indication identifier reestablishPDCPAsAMUM that is different from the PDCP re-establishment indication. It is indicated that the PDCP entity is re-established by using a UM MRB means or the PDCP entity is re-established by using an AM MRB means. The user equipment determines, according to the PDCP re-establishment indication reestablishPDCP transmitted by the base station, whether the corresponding PDCP entity needs to be re-established (refer to step S101), and determines a PDCP entity re-establishment means according to the first indication identifier reestablishPDCPAsAMUM transmitted by the base station and different from the PDCP re-establishment indication (refer step S102).

The first indication identifier reestablishPDCPAsAMUM may indicate PDCP entity re-establishment using one of the following means:
(1) If a received RRC message includes a PDCP re-establishment indication reestablishPDCP related to a split MRB and a first indication identifier for determining a PDCP re-establishment means, the PDCP entity is re-established by using the UM MRB means, otherwise, the PDCP entity is re-established by using the AM MRB means. The value of the first indication identifier may be true or 1 or another predefined value. When the indication identifier is present, it represents that the PDCP entity is re-established by using the UM MRB means.
(2) If a received RRC message includes a PDCP re-establishment indication reestablishPDCP related to a split MRB and a first indication identifier for determining a PDCP re-establishment means, the PDCP entity is re-established by using the AM MRB means, otherwise, the PDCP entity is re-established by using the UM MRB means. The value of the first indication identifier may be true or 1 or another predefined value. When the indication identifier is present, it represents that the PDCP entity is re-established by using the AM MRB means.
(3) The first indication identifier reestablishPDCPAsAMUM has two values, wherein one value is used to indicate that the PDCP entity is re-established by using the UM MRB means, and the other value is used to indicate that the PDCP entity is re-established by using the AM MRB means. The base station indicates the PDCP entity re-establishment means by setting the first indication identifier to a corresponding value. If the received RRC message includes the PDCP re-establishment indication reestablishPDCP and the first indication identifier having the value corresponding to the PDCP entity being re-established by using the AM MRB means, the PDCP entity is re-established by using the AM MRB means. If the received RRC message includes the PDCP re-establishment indication reestablishPDCP and the first indication identifier having the value corresponding to the PDCP entity being re-established by using the UM MRB means, the PDCP entity is re-established by using the UM MRB means.

The PDCP re-establishment indication and the first indication identifier are carried in the same RRC message. When the PDCP entity of the split MRB needs to be re-established, the PDCP entity is re-established according to the means indicated by the first indication identifier.

It may be specified that the first indication identifier can be configured only for a split MRB associated with RLC entities of different modes.

reestablishPDCP is used to indicate that the PDCP entity should be re-established.

It should be noted that, in addition to triggering PDCP re-establishment via a PDCP re-establishment indication, when other events trigger PDCP re-establishment of a split MRB configured with different RLC modes, the PDCP entity may be re-established according to the means configured by the first indication identifier shown in the embodiment described above.

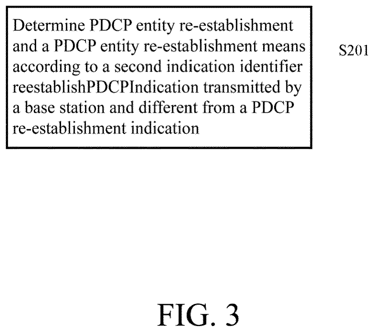

FIG. 3 is a schematic diagram showing a method performed by user equipment according to Embodiment 2. In Embodiment 2, a base station indicates PDCP entity re-establishment and a PDCP entity re-establishment means via a second indication identifier reestablishPDCPIndication that is different from the PDCP re-establishment indication. User equipment determines PDCP entity re-establishment and a PDCP entity re-establishment means according to the second indication identifier reestablishPDCPIndication transmitted by the base station and different from the PDCP re-establishment indication (refer to step S201). The second indication identifier reestablishPDCPIndication has two values, wherein one value is used to indicate that the PDCP entity is re-established by using the UM MRB means, and the other value is used to indicate that the PDCP entity is re-established by using the AM MRB means. The base station indicates the PDCP entity re-establishment and the PDCP entity re-establishment means by setting the second indication identifier to a corresponding value.

When the PDCP entity of the split MRB needs to be re-established, the PDCP entity is re-established according to the means indicated by the second indication identifier.

It may be specified that the first indication identifier can be configured only for a split MRB associated with RLC entities of different modes.

### Implementation 2: for a split MRB associated with RLC of different modes, it is predefined which means is used to re-establish a PDCP entity

In Embodiment 3, for a split MRB associated with RLC of different modes, when a corresponding PDCP entity receives a PDCP entity re-establishment request from upper layers, the PDCP entity is re-established according to the AM MRB means.

In Embodiment 4, for a split MRB associated with RLC of different modes, when a corresponding PDCP entity receives a PDCP entity re-establishment request from upper layers, the PDCP entity is re-established according to the UM MRB means.

### Implementation 3

In Embodiment 5, if a received RRC message configured for a split MRB includes a PDCP re-establishment indication reestablishPDCP and an information element HFN Initial for configuring or initializing an HFN, a PDCP entity of the split MRB is re-established according to the UM MRB, otherwise, a PDCP entity of the split MRB is re-established according to the AM MRB.

In the present embodiment, if a base station expects UE to re-establish a PDCP entity according to the UM MRB, the information element HFN_Initial must be carried.

### Implementation 4

A novel PDCP entity re-establishment means is defined for a split MRB configured with different RLC modes.

In Embodiment 6, for a split MRB configured with different RLC modes, when a PDCP entity corresponding thereto receives a PDCP entity re-establishment request from upper layers, at least one of the following operations is performed:
(1) Performing header decompression using EHC for all stored PDCP SDUs if mrbContinueEHC_DL is not configured (perform header decompression using EHC for all stored PDCP SDUs if drbContinueEHC-DL is not configured).
(2) Performing header decompression using ROHC for all stored PDCP SDUs if mrb-ContinueROHC is not configured (perform header decompression using ROHC for all stored PDCP SDUs if drbContinueROHC is not configured).
(3) If an initial value HFN_Initial of the HFN is configured and if t-Reordering is running, stopping, and resetting t-Reordering, and delivering all stored PDCP SDUs to the upper layers in ascending order of associated COUNT values after performing header decompression.
(4) If the initial value HFN_Initial of the HFN is configured, setting RX_NEXT and RX_DELIV to initial values.

Embodiments of re-establishing a PDCP entity by using the AM MRB means in embodiments of the present invention are described below.

An operation of performing PDCP entity re-establishment by re-establishing a PDCP entity according to the AM MRB means includes at least one of the following:
(1) Performing header decompression using EHC for all stored PDCP SDUs if mrbContinueEHC_DL is not configured (perform header decompression using EHC for all stored PDCP SDUs if drbContinueEHC-DL is not configured).
(2) Performing header decompression using ROHC for all stored PDCP SDUs if mrb-ContinueROHC is not configured (perform header decompression using ROHC for all stored PDCP SDUs if drbContinueROHC is not configured).

Embodiments of re-establishing a PDCP entity by using the UM MRB means in embodiments of the present invention are described below.

An operation performed for re-establishing a PDCP entity according to the UM MRB means includes at least one of the following:
(1) If the timer t-Reordering is running, stopping, and resetting t-Reordering, and delivering all stored PDCP SDUs to the upper layers in ascending order of associated COUNT values after performing header decompression (for UM DRBs, deliver all stored PDCP SDUs to the upper layers in ascending order of associated COUNT values after performing header decompression).
(2) Setting RX_NEXT and RX _DELIV to initial values.

It should be noted that re-establishing a PDCP entity according to the AM/UM MRB means may further include other operations not listed in the embodiments described above. In addition, the PDCP entities in the present disclosure are all receiving PDCP entities.

In addition, the meaning of parameters involved in the embodiments of the present disclosure is briefly described below, and reference may be made to the latest technical specifications of the 3GPP for details. mrb-ContinueROHC is used to indicate that the PDCP entity continues or resets an ROHC header compression protocol during a PDCP re-establishment process. mrbContinueEHC_DL indicates that the PDCP entity continues or resets a downlink EHC header compression protocol during the PDCP re-establishment process. t-Reordering is used to detect loss of a PDCP data PDU. COUNT is composed of a hyper frame number (HFN) and a PDCP sequence number (SN). RX_NEXT is a state variable used to indicate the COUNT value of a next PDCP SDU expected to be received. RX _DELIV is a state variable used to indicate the COUNT value of the first PDCP SDU that has not been delivered to upper layers but is still waiting for reception. The HFN is the hyper frame number. The HFN of the initial values (COUNT) of RX_NEXT and RX_DELIV is determined by HFN_Initial. The PDCP SN is determined by the sequence number x of the first received PDCP PDU or SDU. For example, PDCP SN is (x - 0.5 × 2[pdcp - SN - SizeDL - 1]) modulo (2[pdcp - SN - SizeDL]). pdcp-SN-SizeDL is the PDCP sequence number size for downlink.

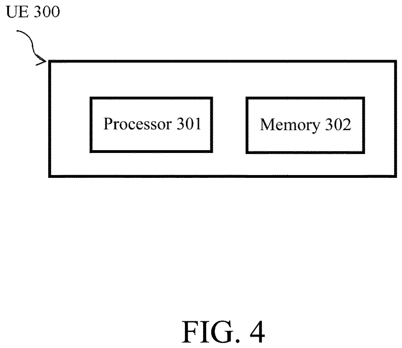

FIG. 4 is a simplified structural block diagram of user equipment (UE) according to the present invention. As shown in FIG. 4, the UE 300 includes a processor 301 and a memory 302. The processor 301 may include, for example, a microprocessor, a microcontroller, an embedded processor, and the like. The memory 302 may include, for example, a volatile memory (such as a random access memory (RAM)), a hard disk drive (HDD), a non-volatile memory (such as a flash memory), or other memories. etc. The memory 302 has program instructions stored thereon. The instructions, when run by the processor 301, can implement the above method performed by user equipment as described in detail in the present invention.

In the embodiments of the present disclosure, the PTM RLC entity is also referred to as an RLC entity associated with PTM or an RLC entity configured with a G-RNTI or an RLC entity associated with a G-RNTI or an RLC entity for PTM transmission, and the PTP RLC entity is also referred to as an RLC entity associated with PTP or an RLC entity for PTP transmission.

It should be noted that one MBS service (or referred to as an MBS session) may be identified by one MBS identifier. The MBS identifier may be a TMGI and/or a session identifier sessionId. The TMGI may include a PLMN identifier and/or a service identifier. The service identifier uniquely identifies one MBS service in one PLMN.

Additionally, the computer-executable instructions or program running on the device according to the present disclosure may be a program that enables the computer to implement the functions of the embodiments of the present disclosure by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The computer-executable instructions or program for implementing the functions of the embodiments of the present disclosure may be recorded on a computer-readable storage medium. The corresponding functions may be achieved by reading programs recorded on the recording medium and executing the programs by the computer system. The phrase "computer system" herein may be a computer system embedded in the device, which may include operating systems or hardware (e.g., peripherals). The "computer-readable storage medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of the advances in semiconductor technology, one or a plurality of embodiments of the present disclosure may also be implemented using these new integrated circuit technologies.

Furthermore, the present disclosure is not limited to the embodiments described above. Although various examples of the described embodiments have been described, the present disclosure is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present disclosure have been described in detail above with reference to the accompanying drawings. However, the specific structures are not limited to the above embodiments. The present disclosure also includes any design modifications that do not depart from the substance of the present disclosure. In addition, various modifications may be made to the present disclosure within the scope of the claims. Embodiments resulted from the appropriate combinations of the technical means disclosed in different embodiments are also included within the technical scope of the present disclosure. In addition, components with the same effect described in the above embodiments may be replaced with one another.

## Claims

1. User equipment, comprising:
a processing unit, configured to receive a packet data convergence protocol (PDCP) entity re-establishment request from upper layers,
if the PDCP entity is a PDCP entity of a split multicast broadcast service radio bearer (MRB), point to multipoint (PTM) radio link control (RLC) of the split MRB being configured to be unacknowledged mode (UM) RLC, and point to point (PTP) RLC being configured to be acknowledged mode (AM) RLC, and
if the split MRB is not configured with a field indicating that the PDCP entity continues or resets an ROHC header compression protocol during a PDCP re-establishment process, perform header decompression using ROHC for all stored PDCP service data units (SDUs).

2. User equipment, comprising:
a processing unit, configured to receive a packet data convergence protocol (PDCP) entity re-establishment request from upper layers,
if the PDCP entity is a PDCP entity of a split multicast broadcast service radio bearer (MRB), point to multipoint (PTM) radio link control (RLC) of the split MRB being configured to be unacknowledged mode (UM) RLC, and point to point (PTP) RLC being configured to be acknowledged mode (AM) RLC, and
if the split MRB is not configured with a field indicating that the PDCP entity continues or resets an EHC header compression protocol during a PDCP re-establishment process, perform header decompression using EHC for all stored PDCP service data units (SDUs).
